# EUROPEAN PATENT SPECIFICATION

(11) **EP 4 433 862 B1**
(45) Date of publication and mention of the grant of the patent: **26.11.2025**
(21) Application number: 23720431.8
(22) Date of filing: 31.03.2023
(51) Int. Cl.: G02B 27/01

(54) **SEE-THROUGH DISPLAY WITH VARYING THICKNESS CONDUCTORS**
DURCHSICHTIGE ANZEIGE MIT LEITERN UNTERSCHIEDLICHER DICKE
AFFICHAGE TRANSPARENT À CONDUCTEURS À ÉPAISSEUR VARIABLE

(30) Priority: 02.09.2022 US 202263403498 P
(43) Date of publication of application: 25.09.2024
(73) Proprietor: Google LLC, Mountain View, CA 94043 (US)
(72) Inventor: MULDOON, Ian Rickard, Mountain View, California 94043 (US); CAKMAKCI, Ozan, Mountain View, California 94043 (US)
(74) Representative: Maikowski & Ninnemann Patentanwälte Partnerschaft mbB
(86) International application number: PCT/US2023/017047
(87) International publication number: WO 2024/049505

(56) References cited:
- US-A1- 2016 055 822
- US-A1- 2017 315 417
- US-A1- 2021 225 949
- US-A1- 2021 327 966
- US-A1- 2022 179 147

## Description

### BACKGROUND

In the field of optics, a combiner is an optical apparatus that combines two light sources. For example, display light is transmitted from an image source (e.g., a micro-display) and directed to a combiner via a waveguide (also termed a lightguide). The combiner combines the display light with environmental light from the world to integrate content from the image source with a view of the real world.

Optical combiners are used in heads-up displays (HUDs), examples of which include wearable heads-up displays (WHUDs) and head-mounted displays (HMDs) or near-eye displays, which allow a user to view computer-generated content (e.g., text, images, or video content) superimposed over a user's environment viewed through the HMD, creating what is known as augmented reality (AR). For example, in one type of WHUD, display light from an image source is coupled into a waveguide substrate, guided through the substrate via one or more instances of total internal reflection (TIR), and then directed out of the waveguide (toward an eye of a user).

In some applications, a WHUD is implemented in an eyeglass frame form factor (which may include variants such as goggles, etc.) with an optical combiner forming at least one of the lenses within the eyeglass frame. The HMD enables a user to view displayed computer-generated AR content while still viewing their environment. US 2016/055822 A1 discloses a dimming module for a near-eye display device that controls an amount of ambient light that passes through the transmissive near-eye display to a user. Further, US 2021/225949 A1 describes an organic light emitting display substrate including, among others, a light emitting layer, a reflecting layer and a transparent conducting layer. US 2021/327966 A1 discloses a display substrate including a base plate, a plurality of pixel structures on the base plate, and a color resist layer on a side of the plurality of pixel structures away from the base plate.

### BRIEF DESCRIPTION OF THE DRAWINGS

The invention is set out in the appended set of claims. The present disclosure may be better understood, and its numerous features and advantages made apparent to those skilled in the art by referencing the accompanying drawings. The use of the same reference symbols in different drawings indicates similar or identical items.
FIG. 1 illustrates a typical configuration of a display utilizing patterned depositions of a transparent conductor material.
FIGs. 2 and 3 illustrate an example display system employing an augmented reality optical system in accordance with some embodiments.
FIGs. 4 and 5 illustrate example configurations of a display utilizing patterned depositions of a transparent conductor material in accordance with some embodiments.
FIGs. 6-1 and 6-2 illustrate a deposition and patterning process for the creation of a patterned deposition of a substantially transparent conductor to an optical substrate, in accordance with some embodiments.
FIG. 7 is a block diagram illustrating an overview of operations of a display system in accordance with one or more embodiments.

### DETAILED DESCRIPTION

In certain implementations of a WHUD device, a dimmer is utilized to block a portion of light from the outside world from reaching the user's eye without reducing the brightness of the AR content generated by the device. In various scenarios, such a dimmer provides a fixed reduction in light (improving contrast of the AR content in bright environments), or is controllable via one or more control signals, such as in response to the brightness of the surrounding world or an electrical signal from one or more controllers of the WHUD device. When electrically controlled, the dimmer is sometimes divided into regions or pixels, allowing variation in how much light is blocked across the user's field of view. In various embodiments and scenarios, a dimmer is a separate optical element, or is integrated into a combiner of the WHUD device. Typical use of a WHUD device for presentation of AR content typically involves hard or soft occlusion of one or more individual objects, such as to partially or fully occlude them in favor of one or more portions of the AR content. For example, when displaying sharply detailed graphical or other AR content, partially or fully occluding portions of world-side light assists the presentation of that content with relatively high contrast. As another example, presenting AR content that interacts (or appears to interact) with objects in the real world may involve hard or soft occlusion of one or more of those individual objects, such as to partially or fully occlude them in favor of one or more portions of the AR content. In various configurations and in various embodiments described herein, such occlusion may be accomplished via an addressable world occlusion (AWO) display.

Various types of displays (*e.g.*, passive liquid crystal (LCD), electrochromic (EC), and guest-host liquid crystal) share a substantially similar structure: two or more layers of substrate (typically of glass or other substantially transparent optical substrate), with interfacing sides of those layers forming a pattern of a transparent conductor, such as indium-tin oxide (ITO) or other semiconducting oxide of tin, indium, zinc, cadmium, silver, gold, or titanium nitride. In various configurations, additional coatings, layers and liquids are disposed between the layers of substrate in order to enable the display. Such patterns are typically created using a vacuum deposition process to deposit a layer of transparent conductor over a substrate, and then selectively removing unwanted portions of that deposited transparent conductor using lithographic etching or laser ablation to form the desired conductive pattern.

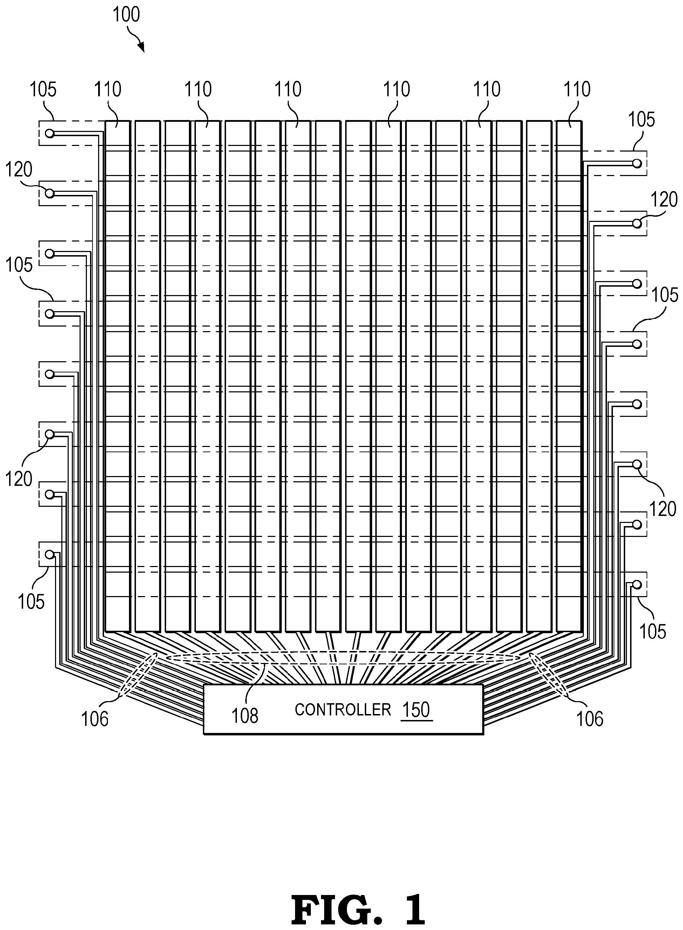

FIG. 1 illustrates a conductive pattern 100 of transparent conductors (shown here as contrasting sets of non-transparent conductors for ease of illustration) used to form a typical display. A set of row electrodes 105 is disposed on a first layer of optical substrate (not shown), while a set of column electrodes 110 is disposed on a second layer of optical substrate (not shown). The intersection of a particular row electrode 105 and a particular column electrode 110 defines an addressable segment of the display, typically termed a pixel. (It will be appreciated that typical displays include significantly greater quantities of transparent conductor electrodes than those depicted, which are simplified here for ease of illustration.) Collectively, the set of row electrodes 105 and set of column electrodes 110 may be referenced herein as transparent electrodes 105, 110.

An integrated controller 150, typically formed via deposition of transparent conductors in a chip-on-glass configuration, is coupled to each individual conductor electrode of the set of row electrodes 105 via trace conductors 106 and crossover dots 120. Similarly, the integrated controller 150 is coupled to each individual conductor electrode of the set of column electrodes 110 via trace conductors 108 and crossover dots 120. The trace conductors 106, 108 are typically quite narrow, often having a width of 50µm or smaller, and therefore require a sufficient thickness to both carry enough charge to the transparent electrodes 105, 110 and to ensure that minor defects in deposition or patterning of the trace conductors 106, 108 do not create a conductive gap. (As used herein, width and length are dimensions measured along the plane defined by the substrate on which a conductor is deposed, while thickness is a dimension measured perpendicular to that substrate plane.) Notably, the relative width of transparent electrodes 105, 110 is typically much greater than that of trace conductors 106, 108, often by a factor of 10 or more.

As light shines through the pattern 100 and the underlying layers of optical substrate used in the display, it is affected in different ways. In particular, because the optical substrate layers typically have a lower refractive index than the transparent conductors used to form the pattern 100, light that travels through the pattern 100 will undergo a small phase shift relative to light that instead passes through the substrate layers in a gap between the sets of electrodes 105, 110. This phase shift, combined with the repeating structure formed by the sets of electrodes 105, 110, often creates an undesirable diffraction pattern. The diffraction pattern causes the appearance of various display artifacts, such as blur and double images, to a camera or human eye looking through the display. For typical backlit or reflective displays (e.g., a television, monitor, or other non-transparent display), diffraction patterns resulting from patterned transparent conductor electrodes and other display elements do not impact display quality, as a user does not attempt to see through that display to the external world. However, in an AR display or other display in which a user is intended to view external world light and the display light simultaneously, such diffraction patterns may significantly detract from or otherwise interfere with a perceived quality of the ostensibly transparent (or substantially transparent) display.

Techniques described herein support the production and use of addressable world occlusion elements for wearable or other AR displays, such as embodiments in which the user views the world through an AR combiner display and an AWO display behind it, while reducing or eliminating diffraction artifacts that would otherwise detract from or interfere with the perceived display quality. In certain embodiments, an AWO display layer is optically coupled to (e.g., disposed on, physically coupled to, or positioned proximate to) a world side of a lens element of a wearable heads-up display (WHUD) device to selectively occlude (fully or partially) external world light passing through lens elements.

One way to reduce the severity of the display artifacts resulting from diffraction patterns is to reduce the thickness of the transparent conductor used to form elements of the display where possible, thereby reducing the phase difference between light passing through the transparent conductor and light passing through only the underlying optical substrate. In various embodiments discussed herein, the severity of diffraction artifacts resulting from patterned transparent conductors of the AWO display layer is mitigated by reducing a thickness of the disposed transparent conductor material in regions of the AWO display layer, such as regions in which relatively wide portions of transparent conductor form addressable display pixels.

In certain embodiments, the thickness of the transparent conductor material is modulated between multiple distinct regions of the AWO display layer. For example, in certain embodiments multiple regions of the AWO display layer may each utilize patterned transparent conductors disposed with a different respective thickness, such as to dispose thinner conductor material in a central region with relatively wide electrodes, while thicker conductor material is disposed in a routing region with narrower trace conductors. In certain embodiments, an intermediate region is provided between the central region and routing region, with an intermediate thickness or varying intermediate thicknesses of conductor material disposed accordingly. In embodiments in which multiple distinct thicknesses are utilized across different regions, each such region may have transparent conductors disposed with substantially a specified thickness, indicating that notwithstanding minor variations in the thickness of transparent conductors disposed within one specified region, the substantially transparent conductors disposed within the identified region have an average thickness that is distinct from that of transparent conductors disposed within other such regions.

Although some embodiments of the present disclosure are described and illustrated herein with reference to a particular example near-eye display system in the form of a WHUD, it will be appreciated that the apparatuses and techniques of the present disclosure are not limited to this particular example, but instead may be implemented in any of a variety of display systems using the guidelines provided herein.

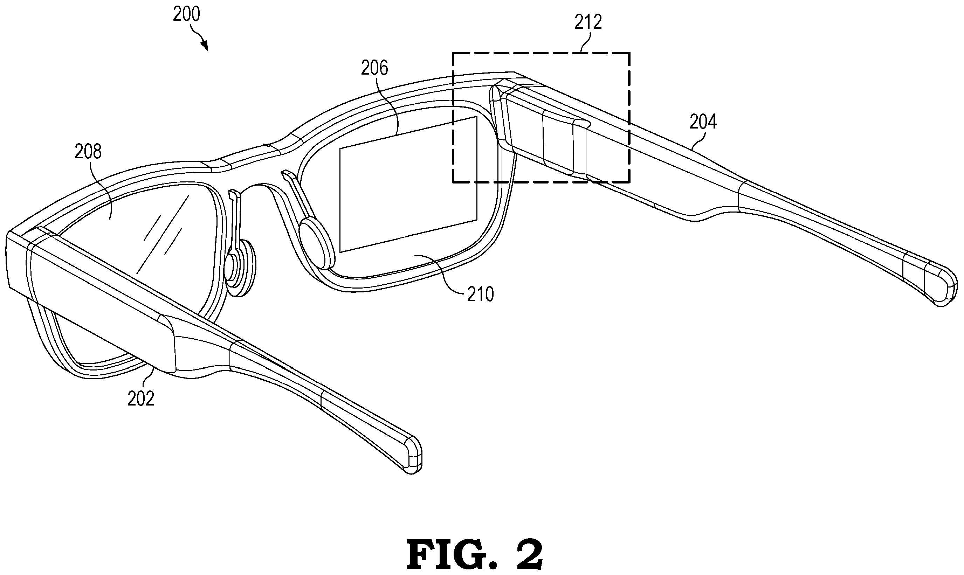

FIG. 2 illustrates an example display system 200 employing an AR optical system in accordance with some embodiments. The display system 200 has a support structure 202 that includes an arm 204, which houses a projector (e.g., a laser projector, a micro-LED projector, a Liquid Crystal on Silicon (LCOS) projector, or the like). The projector is configured to project images toward the eye of a user via a waveguide (not shown here), such that the user perceives the projected images as being displayed in a field of view (FOV) area 206 of a display at one or both of lens elements 208, 210. In the depicted embodiment, the display system 200 is a near-eye display system in the form of a WHUD in which the support structure 202 is configured to be worn on the head of a user and has a general shape and appearance (that is, form factor) of an eyeglasses (e.g., sunglasses) frame.

The support structure 202 contains or otherwise includes various components to facilitate the projection of such images toward the eye of the user, such as a projector and a waveguide. In some embodiments, the support structure 202 further includes various sensors, such as one or more front-facing cameras, rearfacing cameras, other light sensors, motion sensors, accelerometers, and the like. In some embodiments, the support structure 202 includes one or more radio frequency (RF) interfaces or other wireless interfaces, such as a Bluetooth(TM) interface, a WiFi interface, and the like. Further, in some embodiments, the support structure 202 further includes one or more batteries or other portable power sources for supplying power to the electrical components of the display system 200. In some embodiments, some or all of these components of the display system 200 are fully or partially contained within an inner volume of support structure 202, such as within the arm 204 in region 212 of the support structure 202. It should be noted that while an example form factor is depicted, it will be appreciated that in other embodiments the display system 200 may have a different shape and appearance from the eyeglasses frame depicted in FIG. 2. It should be understood that instances of the term "or" herein refer to the non-exclusive definition of "or", unless noted otherwise. For example, herein the phrase "X or Y" means "either X, or Y, or both".

One or both of the lens elements 208, 210 are used by the display system 200 to provide an augmented reality (AR) display in which rendered graphical content can be superimposed over or otherwise provided in conjunction with a real-world view as perceived by the user through the lens elements 208, 210. For example, a projection system of the display system 200 uses light to form a perceptible image or series of images by projecting the display light onto the eye of the user via a projector of the projection system, a waveguide formed at least partially in the corresponding lens element 208 or 210, and one or more optical elements (e.g., one or more scan mirrors, one or more optical relays, or one or more collimation lenses that are disposed between the projector and the waveguide or integrated with the waveguide), according to various embodiments.

One or both of the lens elements 208, 210 comprises a lens stack having multiple layers, at least one of which layers includes at least a portion of a waveguide that routes display light received by an incoupler of the waveguide to an outcoupler of the waveguide. The waveguide outputs the display light toward an eye of a user of the display system 200. The display light is modulated and projected onto the eye of the user such that the user perceives the display light as an image. In addition, each of the lens elements 208, 210 is sufficiently transparent to allow a user to see through the lens elements to provide a field of view of the user's real-world environment such that the image appears superimposed over at least a portion of the real-world environment. In certain embodiments, one or both of the lens elements 208, 210 include an addressable world occlusion (AWO) display layer that is optically coupled to a world side of those lens elements 208, 210.

In some embodiments, the projector of the projection system of the display 200 is a digital light processing-based projector, a scanning laser projector, or any combination of a modulative light source, such as a laser or one or more lightemitting diodes (LEDs), and a dynamic reflector mechanism such as one or more dynamic scanners, reflective panels, or digital light processors (DLPs). In some embodiments, a display panel of the projector is configured to output light (representing an image or portion of an image for display) into the waveguide of the projector. The waveguide expands the display light and outputs the display light toward the eye of the user via an outcoupler.

The projector is communicatively coupled to the controller and a nontransitory processor-readable storage medium or memory storing processorexecutable instructions and other data that, when executed by the controller, cause the controller to control the operation of the projector. In some embodiments, the controller controls the projector to selectively set the location and size of the FOV area 206. In some embodiments, the controller is communicatively coupled to one or more processors (not shown) that generate content to be displayed at the display system 200. The projector outputs display light toward the FOV area 206 of the display system 200 via the waveguide. In some embodiments, at least a portion of an outcoupler of the waveguide overlaps the FOV area 206. Herein, the range of different user eye positions that will be able to see the display is referred to as the eyebox of the display.

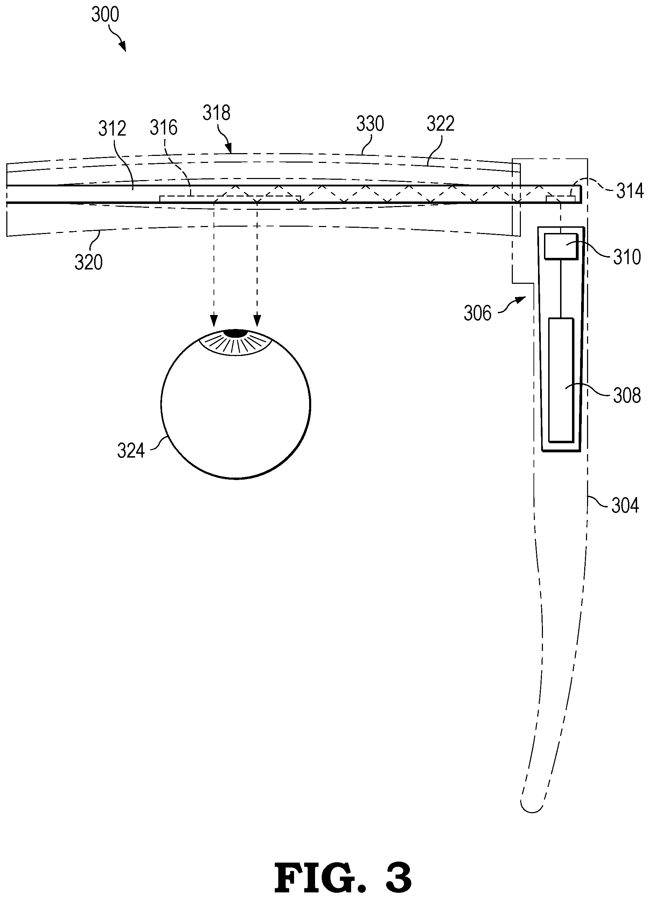

FIG. 3 illustrates a portion of a display system 300 that includes a projection system having a projector 306 and a waveguide 312 with multiple optical paths between an incoupler 314 and an outcoupler 316 of the waveguide 312. In some embodiments, the display system 300 represents the display system 200 of FIG. 2. In the present example, the arm 304 of the display system 300 houses the projector 306, which includes an optical engine 308 (e.g., a display panel), one or more optical elements 310, the incoupler 314, and a portion of the waveguide 312.

The display system 300 includes an optical combiner lens 318, which in turn includes a first lens 320, a second lens 322, and the waveguide 312, with the waveguide 312 embedded or otherwise disposed between the first lens 320 and the second lens 322. The optical combiner lens 318 further includes an AWO display layer 330 to selectively occlude one or more addressable portions of the AWO display layer. Although in the depicted embodiment the AWO display layer 330 is shown as substantially overlaying the entire world side area and/or width of the waveguide 312, in various embodiments the AWO display layer is physically configured to selectively occlude a smaller area. For example, in certain embodiments the AWO display layer 330 may be optically coupled to the waveguide 312 such that it only occupies an area substantially corresponding to that of the outcoupler 316.

Light exiting through the outcoupler 316 travels through the first lens 320 (which corresponds to, for example, an embodiment of the lens element 210 of the display system 200 or portion thereof). In use, the display light exiting the first lens 320 enters the pupil of an eye 324 of a user wearing the display system 300, causing the user to perceive a displayed image carried by the display light output by the optical engine 308. The optical combiner lens 318 and AWO display layer 330 are substantially (and selectively, in the case of AWO display layer 330) transparent, such that at least some light from real-world scenes corresponding to the environment around the display system 300 passes through the AWO display layer 330, the second lens 322, the waveguide 312, and the first lens 320 to the eye 324 of the user. In this way, images or other graphical content output by the projector 306 are combined (e.g., overlayed) with real-world images of the user's environment when projected onto the eye 324 of the user to provide an AR experience to the user.

The waveguide 312 of the display system 300 includes two diffraction structures: the incoupler 314 and the outcoupler 316. In some embodiments, one or more exit pupil expanders, such as a diffraction grating, is arranged in an intermediate stage between incoupler 314 and outcoupler 316 to receive light that is coupled into the waveguide 312 by the incoupler 314, expand the display light received at each exit pupil expander, and redirect that light towards the outcoupler 316, where the outcoupler 316 then couples the display light out of the waveguide 312 (e.g., toward the eye 324 of the user).

The term "waveguide," as used herein, will be understood to mean a combiner using one or more of total internal reflection (TIR), specialized filters, or reflective surfaces, to transfer light from an incoupler (such as the incoupler 314) to an outcoupler (such as the outcoupler 316). In some display applications, the display light is a collimated image, and the waveguide transfers and replicates the collimated image to the eye. In general, the terms "incoupler" and "outcoupler" will be understood to refer to any type of optical grating structure, including, but not limited to, diffraction gratings, holograms, holographic optical elements (e.g., optical elements using one or more holograms), volume diffraction gratings, volume holograms, surface relief diffraction gratings, or surface relief holograms. In some embodiments, a given incoupler or outcoupler is configured as a transmissive grating (e.g., a transmissive diffraction grating or a transmissive holographic grating) that causes the incoupler or outcoupler to transmit display light. In some embodiments, a given incoupler or outcoupler is a reflective grating (e.g., a reflective diffraction grating or a reflective holographic grating) that causes the incoupler or outcoupler to reflect light.

In the present example, the incoupler 314 relays received display light to the outcoupler 316 via multiple optical paths through the waveguide. In some embodiments, the incoupler 314 redirects a first portion of display light to the outcoupler 316 via a first optical path along which a first exit pupil expander (not shown; implemented as a fold grating in some embodiments) is disposed and redirects a second portion of display light toward the outcoupler 316 via a second optical path along which a second exit pupil expander (not shown; implemented as a fold grating in some embodiments) is disposed. The display light propagates through the waveguide 312 via TIR. The outcoupler 316 then outputs the display light to the eye 324 of the user.

In some embodiments, the projector 306 is coupled to a driver or other controller (not shown), which controls the timing of emission of display light from light sources (e.g., LEDs) of the optical engine 308 in accordance with instructions received by the controller or driver from a computer processor (not shown) coupled thereto to modulate the output light to be perceived as images when output to the retina of the eye 324 of the user. For example, during operation of the display system 300, the light sources of the optical engine 308 output light of selected wavelengths, and the output light is directed to the eye 324 of the user via the optical elements 310 and the waveguide 312. The optical engine 308 modulates the respective intensities of each light source of the optical engine 308, such that the output light represents pixels of an image. For example, the intensity of a given light source or group of light sources of the optical engine 308 corresponds to the brightness of a corresponding pixel of the image to be projected by the projector 306 of the display system 300.

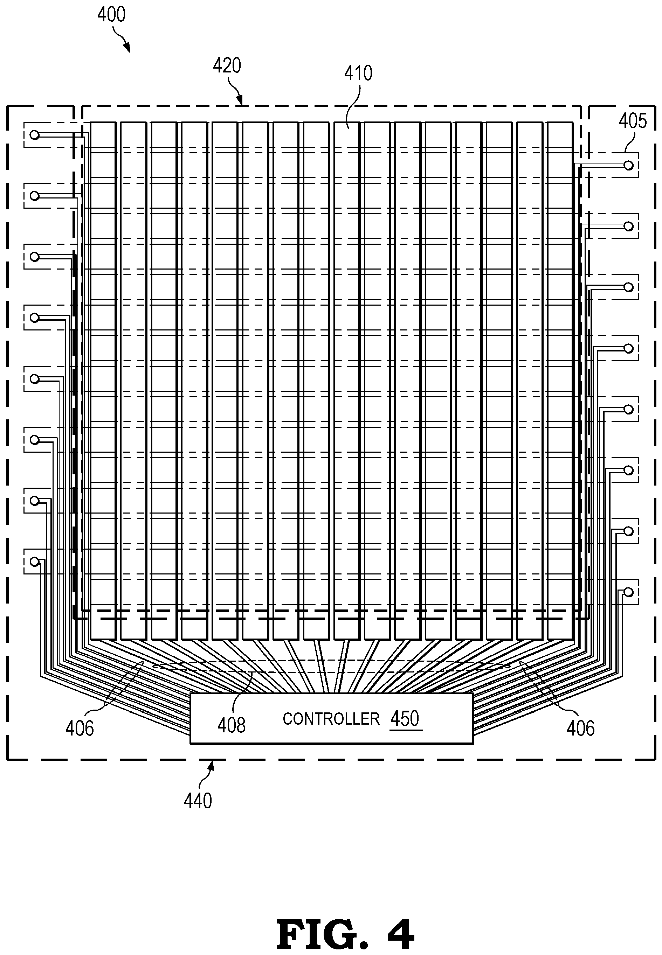

FIG. 4 illustrates an example configuration of a display utilizing patterned depositions of a transparent conductor material in accordance with some embodiments. In particular, and in a manner similar to that described with respect to the conductive pattern 100 of FIG. 1, a set of relatively wide row electrodes 405 is disposed on a first layer of optical substrate, while a set of relatively wide column electrodes 410 is disposed on a second layer of optical substrate. Collectively, the set of row electrodes 405 and the set of column electrodes 410 may be referenced herein as transparent electrodes 405, 410. The intersection of a particular row electrode 405 and a particular column electrode 410 defines an addressable pixel. An integrated controller 450 is coupled to each individual conductor electrode of the set of row electrodes 405 via relatively narrow trace conductors 406, and to each individual conductor electrode of the set of column electrodes 410 via relatively narrow trace conductors 408.

As seen in the embodiment of conductive pattern 400, the transparent conductor material applied to form transparent electrodes 405, 410 is disposed in significantly wider applications than that used to form trace conductors 406, 408. In certain embodiments, this relationship is advantageously leveraged by modulating a transparent conductor thickness between multiple regions of the conductive pattern 400. In particular, in the depicted embodiment the portions of conductive pattern 400 disposed within region 420 have substantially a first relatively small thickness, with the portions of the conductive pattern 400 disposed within region 440 having substantially a second relatively large thickness. In this manner, the relatively wide transparent electrodes 405, 410 are formed using relatively thin depositions of transparent conductor material, while the significantly narrower trace conductors 406, 408 are formed using relatively thick portions of that transparent conductor material, which preserves charge carrying capacity and conductive tolerance of the trace conductors 406, 408.

In addition to reducing the relative phase shift between light passing through the portions of conductive pattern 400 disposed in region 420 and light passing through only the underlying optical substrate - that is, light passing through a gap between the individual electrodes of the transparent electrodes 405, 410 - the thinner conductive layer of region 420 is additionally advantageous by enabling a smaller minimum feature size. In particular, a thinner deposition of transparent conductor material allows a smaller gap between individual electrodes of the transparent electrodes 405, 410, and thereby further diminishes the deleterious effect of any diffraction patterns resulting from light that passes through the region 420. The reduced gap width enabled by the configuration of conductive pattern 400 is advantageous, for example, in providing a clear aperture for diffraction-sensitive imaging in the center of the display.

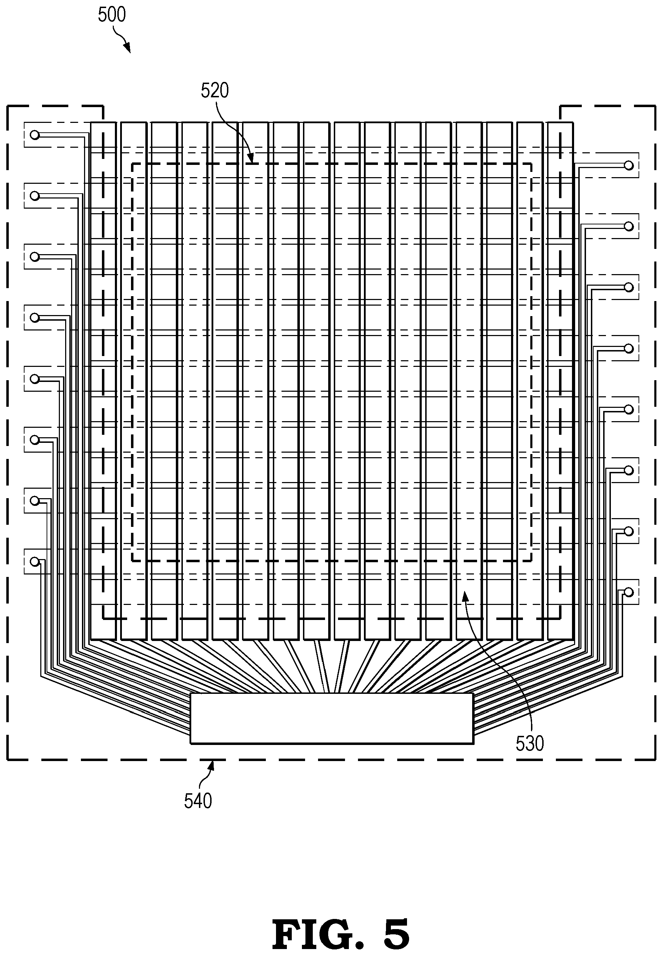

In certain embodiments, resource and other costs associated with precisely aligning variations in conductor thickness during patterning of the transparent conductor may be mitigated by employing a three-region structure of the display, as illustrated in FIG. 5.

FIG. 5 illustrates another example configuration of a display utilizing patterned depositions of a transparent conductor material in accordance with some embodiments. In particular, and in a manner substantially identical to that described with respect to the conductive pattern 400 of FIG. 4, conductive pattern 500 includes a set of relatively wide row / column electrodes disposed on respective layers of optical substrate, with an integrated controller that is coupled to each individual electrode via relatively narrow trace conductors.

In the depicted embodiment, the trace conductors and the integrated controller are in a first region 540, while the center of the addressable area of the display, with the majority of addressable pixels - and therefore the area most sensitive to diffraction artifacts - within a second region 520. In accordance with the description of conductive pattern 400 in FIG. 4, the portions of conductive pattern 500 disposed within region 520 have substantially a relatively small thickness, while the portions disposed within region 440 have a relatively large thickness.

However, in contrast to the embodiment of conductive pattern 400, the conductive pattern 500 includes an intermediate region 530 in which the patterned transparent conductor material is disposed in one or more intermediate thicknesses - that is, one or more thicknesses in a range between the relatively thin depositions of region 520 and the relatively thick depositions of region 540. The intermediate region 530 provides a margin to allow imprecise positioning of the transition(s) in thickness across the multiple regions of the conductive pattern 500. This configuration is advantageous in ensuring a "clear aperture" for diffraction-sensitive imaging in the center of the display, while enabling the thickness transition(s) to be imprecisely positioned.

In certain embodiments, variations in transparent conductor thickness are utilized for only a subset of substrates in a multi-substrate display. For example, in some embodiments in which there are no trace conductors disposed on the top substrate, only a thin conductor layer is used. However, in certain embodiments, connections between the bottom and top substrate may utilize multiple transparent conductor thicknesses on both substrates.

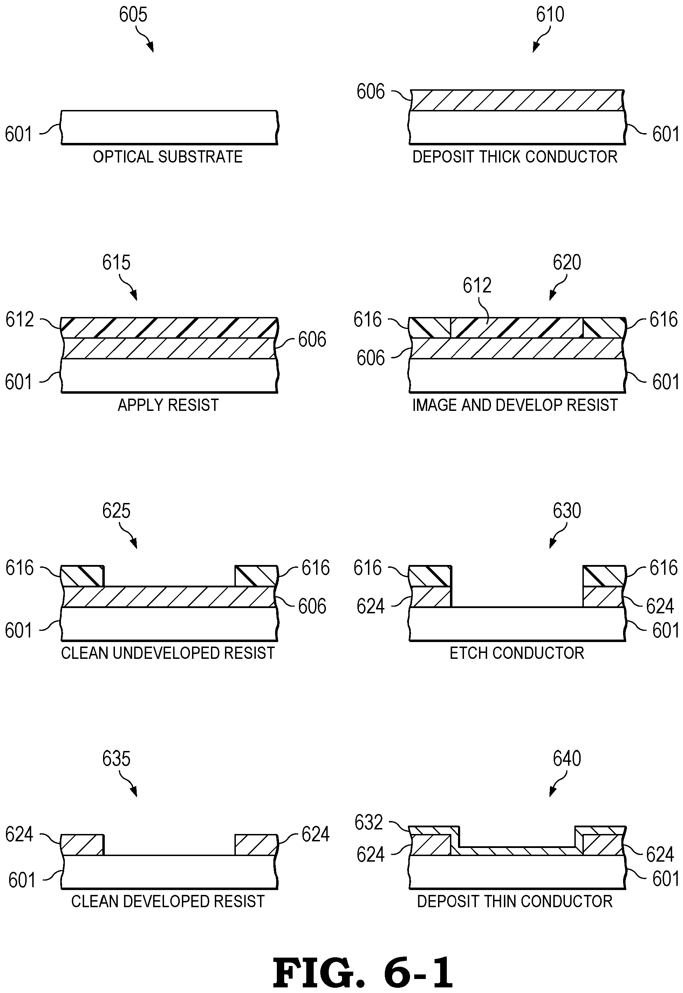

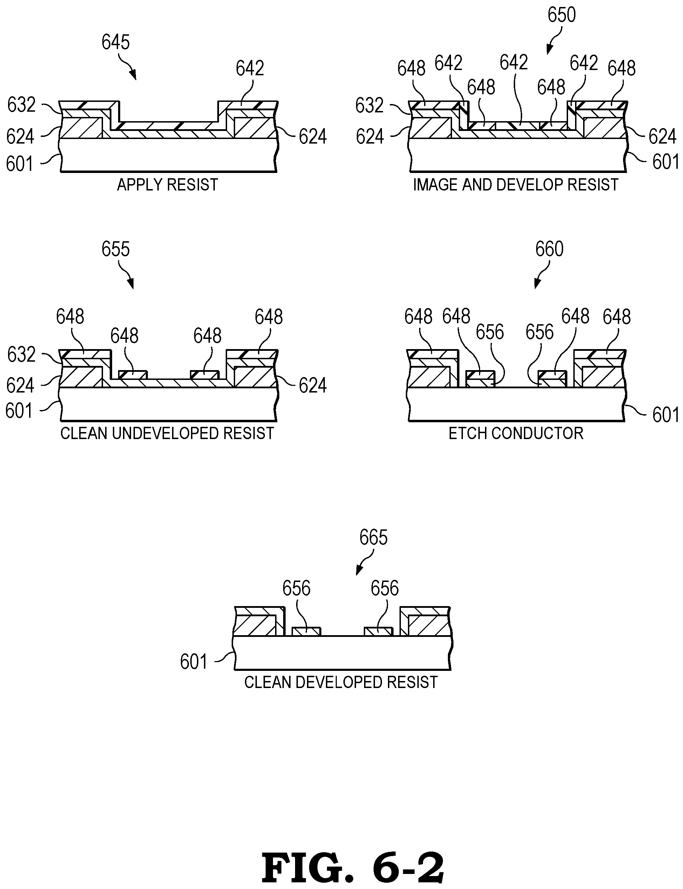

FIGs. 6-1 and 6-2 (collectively referred to as FIG. 6) illustrate a deposition and patterning process for the creation of a patterned deposition of two distinct thicknesses of a substantially transparent conductor on an optical substrate, in accordance with some embodiments. Generally, and as described in greater detail below, each desired thickness of transparent conductor (for example, corresponding to each of multiple regions of an AWO display layer) is separately applied and patterned over the same layer of optical substrate to form a multi-thickness patterned deposition of substantially transparent conductor material across multiple regions of an AWO display layer.

The process begins at step 605, in which a substantially transparent optical substrate 601 is provided. At step 610, a substantially transparent conductor with a relatively large thickness (the thick conductor) 606 is deposited on the top surface of the optical substrate 601. In various embodiments, the thick conductor 606 may be deposited using various known techniques, such as physical vapor deposition (PVD), chemical vapor deposition (CVD), or sputtering. At step 615, a resist mask 612 is applied to the top surface of the thick conductor 606. At step 620, the resist mask 612 is selectively exposed to light or other energy source in order to form developed portions 616 of the resist mask 612. At step 625, the undeveloped portions of that resist mask 612 are removed (e.g., via stripping or ashing), leaving in place the developed portions 616. At step 630, portions of the patterned thick conductor 606 that are not beneath the developed portions 616 are etched away via one or more known techniques (e.g., reactive ion etching (RIE), dry etching, or wet etching). At step 635, the developed portions 616 are removed, leaving the desired thick conductor pattern 624 disposed on the optical substrate 601.

The process continues in order to deposit a second thinner conductor pattern in portions of an AWO display layer, as described below.

At step 640, a substantially transparent conductor with a relatively small thickness (the thin conductor) 632 is deposited on the top surfaces of the optical substrate 601 and the thick conductor pattern 624. At step 645, a resist mask 642 is applied to the top surface of the thin conductor 632. At step 650, the resist mask 642 is selectively exposed to light or other energy source in order to form developed portions 648 of the resist mask 642. At step 655, the undeveloped portions of that resist mask 642 are removed (e.g., via stripping or ashing), leaving in place the developed portions 648. At step 660, portions of the patterned thin conductor 632 that are not beneath the developed portions 648 are etched away. At step 665, the developed portions 648 are removed, leaving the desired pattern 656 of the thin conductor 632 disposed on the optical substrate 601.

It will be appreciated that in various embodiments, other processes may be employed to form multi-thickness patterned depositions of substantially transparent conductor material across multiple regions of an AWO display layer. For example, in certain embodiments the thin conductor is deposited before the thick conductor. As another example, in certain embodiments more than two thicknesses of transparent conductor material are separately disposed.

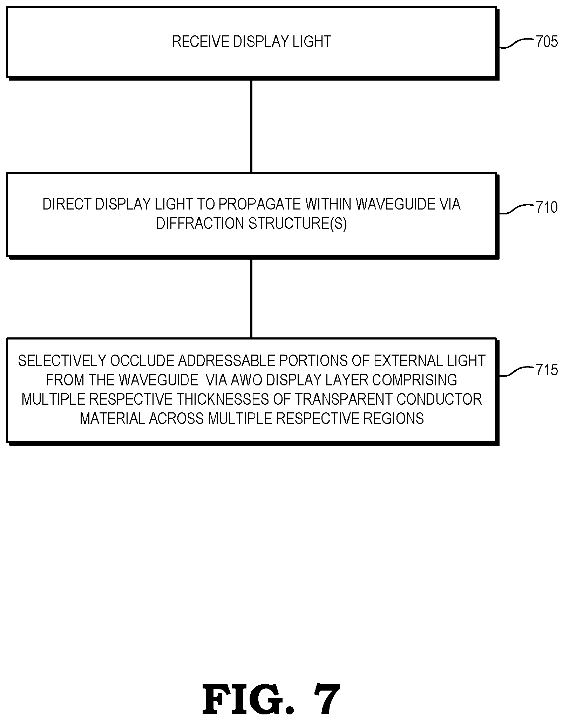

FIG. 7 illustrates a flow diagram of an operational routine in accordance with some embodiments, such as may be collectively performed by one or more components of a WHUD device (e.g., display system 200 of FIG. 2 or display system 300 of FIG. 3).

The routine begins at block 705, in which the WHUD device receives display light representative of an image for display. The routine proceeds to block 710.

At block 710, the WHUD device directs the display light to propagate within a waveguide of the WHUD device via one or more diffraction structures. As described elsewhere herein, in certain embodiments such diffraction structures include an incoupler and/or outcoupler diffraction grating formed in or otherwise optically coupled to the waveguide. The routine proceeds to block 715.

At block 715, the WHUD device selectively occludes one or more addressable segments of external light from reaching the world side of the waveguide via an AWO display layer (e.g., AWO display layer 330 of FIG. 3) optically coupled to the waveguide. As described elsewhere herein, in various embodiments the AWO display layer includes one or more patterned depositions of a substantially transparent conductor disposed using multiple respective thicknesses of the transparent conductor in multiple respective regions.

In some embodiments, certain aspects of the techniques described above may be implemented by one or more processors of a processing system executing software. The software comprises one or more sets of executable instructions stored or otherwise tangibly embodied on a non-transitory computer readable storage medium. The software can include the instructions and certain data that, when executed by the one or more processors, manipulate the one or more processors to perform one or more aspects of the techniques described above. The non-transitory computer readable storage medium can include, for example, a magnetic or optical disk storage device, solid state storage devices such as Flash memory, a cache, random access memory (RAM) or other non-volatile memory device or devices, and the like. The executable instructions stored on the non-transitory computer readable storage medium may be in source code, assembly language code, object code, or other instruction format that is interpreted or otherwise executable by one or more processors.

A computer readable storage medium may include any storage medium, or combination of storage media, accessible by a computer system during use to provide instructions and/or data to the computer system. Such storage media can include, but is not limited to, optical media (e.g., compact disc (CD), digital versatile disc (DVD), Blu-Ray disc), magnetic media (e.g., floppy disk, magnetic tape, or magnetic hard drive), volatile memory (e.g., random access memory (RAM) or cache), non-volatile memory (e.g., read-only memory (ROM) or Flash memory), or microelectromechanical systems (MEMS)-based storage media. The computer readable storage medium may be embedded in the computing system (e.g., system RAM or ROM), fixedly attached to the computing system (e.g., a magnetic hard drive), removably attached to the computing system (e.g., an optical disc or Universal Serial Bus (USB)-based Flash memory), or coupled to the computer system via a wired or wireless network (e.g., network accessible storage (NAS)).

Note that not all of the activities or elements described above in the general description are required, that a portion of a specific activity or device may not be required, and that one or more further activities may be performed, or elements included, in addition to those described. Still further, the order in which activities are listed are not necessarily the order in which they are performed. Also, the concepts have been described with reference to specific embodiments. However, one of ordinary skill in the art appreciates that various modifications and changes can be made without departing from the scope of the claims below. Accordingly, the specification and figures are to be regarded in an illustrative rather than a restrictive sense.

Benefits, other advantages, and solutions to problems have been described above with regard to specific embodiments. No limitations are intended to the details of construction or design herein shown, other than as described in the claims below. Accordingly, the protection sought herein is as set forth in the claims below.

## Claims

1. A display system (300) comprising:
a waveguide (312) comprising an eye side configured to face an eye (324) of a user, and a world side substantially opposite the eye side; and
an addressable world occlusion (AWO) display layer (330) to at least partially occlude one or more addressable portions of external light from the world side of the waveguide (312);
wherein the AWO display layer (330) comprises one or more patterned depositions (624, 656) of a substantially transparent conductor disposed across multiple regions of the AWO display layer (330), such that the one or more patterned depositions (624) disposed within a first region (420, 520) of the multiple regions have substantially a first thickness, and such that the one or more patterned depositions (656) disposed within a second region (440, 540) of the multiple regions have substantially a second thickness,
**characterized in that**
the second thickness is different than the first thickness.

2. The display system of claim 1, wherein the AWO display layer (330) comprises a controller (450), wherein the one or more patterned depositions (656) disposed within the first region (420, 520) comprise two or more sets of overlapping transparent electrodes (405, 410) that form addressable segments of the AWO display layer (330), and wherein the one or more patterned depositions (624) disposed within the second region (440, 540) comprise a plurality of conductive connectors (406) that electrically couple the two or more sets of overlapping transparent electrodes (405, 410) to the controller (450).

3. The display system of claim 2, wherein the first thickness is less than the second thickness.

4. The display system of claim 3, wherein the overlapping transparent electrodes (405, 410) have a respective width that is greater than a respective width of each conductive connector (406) of the plurality of conductive connectors (406).

5. The display system of claim 3, wherein the one or more patterned depositions (656) disposed within the first region (420, 520) includes a first gap between each overlapping transparent electrode (405, 410) of the two or more sets of overlapping transparent electrodes (405, 410), wherein the one or more patterned depositions (624) disposed within the second region (440, 540) includes a second gap between each conductive connector (406) of the plurality of conductive connectors (406), and wherein the first gap has a respective width that is less than a width of the second gap.

6. The display system of claim 3, wherein the waveguide (312) comprises an outcoupler (316) to direct display light out of the waveguide (312) towards the eye (324) of a user, and wherein the first region (420, 520) is configured to substantially correspond to an area occupied by the outcoupler (316) in a field of view of the user.

7. The display system of claim 1, further comprising a third region (530) of the multiple regions, such that the one or more patterned depositions disposed within the third region (530) comprise one or more intermediate thicknesses that are between the first thickness and the second thickness.

8. A method, comprising:
directing display light to propagate within a waveguide (312) having an eye side configured to face an eye (324) of a user and a world side substantially opposite the eye side; and
selectively occluding one or more addressable portions of external light from the world side of the waveguide (312) via an addressable world occlusion (AWO) display layer (330) optically coupled to the world side of the waveguide (312), the AWO display layer (330) comprising one or more patterned depositions (624, 656) of a substantially transparent conductor disposed across multiple regions (420, 520, 440, 540) of the AWO display layer (330), such that the one or more patterned depositions (624, 656) disposed within a first region (420, 520) of the multiple regions have substantially a first thickness and the one or more patterned depositions disposed within a second region of the multiple regions have substantially a second thickness,
**characterized in that**
the second thickness is different than the first thickness.

9. The method of claim 8, the one or more patterned depositions (656) disposed within the first region (420, 520) comprising two or more sets of overlapping transparent electrodes (405, 410) that form addressable segments of the AWO display layer (330), and the one or more patterned depositions (624) disposed within the second region (440, 540) comprising a plurality of conductive connectors (406) that electrically couple the two or more sets of overlapping transparent electrodes (405, 410) to a controller (450) of the AWO display layer (330).

10. The method of claim 9, the first thickness being less than the second thickness.

11. The method of claim 10, the overlapping transparent electrodes (405, 410) having a respective width that is greater than a respective width of each conductive connector (406) of the plurality of conductive connectors (406).

12. The method of claim 10, the one or more patterned depositions (656) disposed within the first region (420, 520) including a first gap between each overlapping transparent electrode (405, 410) of the two or more sets of overlapping transparent electrodes (405, 410), the one or more patterned depositions (624) disposed within the second region (440, 540) including a second gap between each conductive connector (406) of the plurality of conductive connectors (406), and the first gap having a respective width that is less than a width of the second gap.

13. The method of claim 10, wherein the waveguide (312) comprises an outcoupler (316) to direct display light out of the waveguide (312) towards the eye (324) of a user, and wherein the first region (420, 520) is configured to substantially correspond to an area occupied by the outcoupler (316) in a field of view of the user.

14. The method of claim 8, wherein the multiple regions of the AWO display layer (330) include a third region (530), such that the one or more patterned depositions disposed within the third region (530) comprise one or more intermediate thicknesses that are between the first thickness and the second thickness.

15. A method, comprising:
depositing on an optical substrate (601) a first conductive pattern (656) of a substantially transparent conductor (632) in a first region (420, 520) using a first thickness of the substantially transparent conductor (632);
depositing on the optical substrate (601) a second conductive pattern (624) of a substantially transparent conductor (606) in a second region (440, 540) using a second thickness of the substantially transparent conductor (606); and
electrically coupling the first conductive pattern (656) to the second conductive pattern (624),
**characterized in that**
the second thickness is different than the first thickness.

## Patentansprüche

1. Anzeigesystem (300), umfassend:
einen Wellenleiter (312), umfassend eine Augenseite, die dazu konfiguriert ist, einem Auge (324) eines Benutzers zugewandt zu sein, und eine Weltseite, die der Augenseite im Wesentlichen gegenüberliegt; und
eine adressierbare Weltverdeckungs-Anzeigeschicht (addressable world occlusion, AWO) (330), um einen oder mehrere adressierbare Abschnitte von externem Licht von der Weltseite des Wellenleiters (312) zumindest teilweise zu verdecken;
wobei die AWO-Anzeigeschicht (330) eine oder mehrere gemusterte Ablagerungen (624, 656) eines im Wesentlichen transparenten Leiters umfasst, die über mehrere Regionen der AWO-Anzeigeschicht (330) angeordnet sind, sodass die eine oder die mehreren gemusterten Ablagerungen (624), die innerhalb einer ersten Region (420, 520) der mehreren Regionen angeordnet sind, im Wesentlichen eine erste Dicke aufweisen, und sodass die eine oder die mehreren gemusterten Ablagerungen (656), die innerhalb einer zweiten Region (440, 540) der mehreren Regionen angeordnet sind, im Wesentlichen eine zweite Dicke aufweisen,
**dadurch gekennzeichnet, dass**
sich die zweite Dicke von der ersten Dicke unterscheidet.

2. Anzeigesystem nach Anspruch 1, wobei die AWO-Anzeigeschicht (330) eine Steuerung (450) umfasst, wobei die eine oder mehreren gemusterten Ablagerungen (656), die innerhalb der ersten Region (420, 520) angeordnet sind, zwei oder mehr Sätze von überlappenden transparenten Elektroden (405, 410) umfassen, die adressierbare Segmente der AWO-Anzeigeschicht (330) bilden, und wobei die eine oder die mehreren gemusterten Ablagerungen (624), die innerhalb der zweiten Region (440, 540) angeordnet sind, eine Vielzahl von leitenden Verbindern (406) umfassen, die die zwei oder mehr Sätze von sich überlappenden transparenten Elektroden (405, 410) mit der Steuerung (450) elektrisch koppeln.

3. Anzeigesystem nach Anspruch 2, wobei die erste Dicke geringer ist als die zweite Dicke.

4. Anzeigesystem nach Anspruch 3, wobei die sich überlappenden transparenten Elektroden (405, 410) eine jeweilige Breite aufweisen, die größer ist als eine jeweilige Breite jedes leitenden Verbinders (406) der Vielzahl von leitenden Verbindern (406).

5. Anzeigesystem nach Anspruch 3, wobei die eine oder die mehreren gemusterten Ablagerungen (656), die innerhalb der ersten Region (420, 520) angeordnet sind, einen ersten Spalt zwischen jeder sich überlappenden transparenten Elektrode (405, 410) der zwei oder mehr Sätze von sich überlappenden transparenten Elektroden (405, 410) beinhalten, wobei die eine oder die mehreren gemusterten Ablagerungen (624), die innerhalb der zweiten Region (440, 540) angeordnet sind, einen zweiten Spalt zwischen jedem leitenden Verbinder (406) der Vielzahl von leitenden Verbindern (406) aufweisen, und wobei der erste Spalt eine entsprechende Breite aufweist, die geringer ist als eine Breite des zweiten Spalts.

6. Anzeigesystem nach Anspruch 3, wobei der Wellenleiter (312) einen Auskoppler (316) umfasst, um Anzeigelicht aus dem Wellenleiter (312) auf das Auge (324) eines Benutzers zu richten, und wobei die erste Region (420, 520) dazu konfiguriert ist, im Wesentlichen einem Bereich zu entsprechen, der vom Auskoppler (316) in einem Sichtfeld des Benutzers eingenommen wird.

7. Anzeigesystem nach Anspruch 1, ferner umfassend eine dritte Region (530) der mehreren Regionen, sodass die eine oder mehreren gemusterten Ablagerungen, die innerhalb der dritten Region (530) angeordnet sind, eine oder mehrere Zwischendicken umfassen, die zwischen der ersten Dicke und der zweiten Dicke liegen.

8. Verfahren, umfassend:
Richten von Anzeigelicht zum Ausbreiten innerhalb eines Wellenleiters (312), der eine Augenseite, die dazu konfiguriert ist, einem Auge (324) eines Benutzers zugewandt zu sein, und eine Weltseite, die der Augenseite im Wesentlichen gegenüberliegt, aufweist; und
selektives Verdecken eines oder mehrerer adressierbarer Abschnitte des externen Lichts von der Weltseite des Wellenleiters (312) über eine adressierbare Weltverdeckungs-Anzeigeschicht (AWO) (330), die optisch mit der Weltseite des Wellenleiters (312) gekoppelt ist, wobei die AWO-Anzeigeschicht (330) eine oder mehrere gemusterte Ablagerungen (624, 656) eines im Wesentlichen transparenten Leiters umfasst, die über mehrere Regionen (420, 520, 440, 540) der AWO-Anzeigeschicht (330) angeordnet sind, sodass die eine oder die mehreren gemusterten Ablagerungen (624, 656), die innerhalb einer ersten Region (420, 520) der mehreren Regionen angeordnet sind, im Wesentlichen eine erste Dicke aufweisen und die eine oder die mehreren gemusterten Ablagerungen, die innerhalb einer zweiten Region der mehreren Regionen angeordnet sind, im Wesentlichen eine zweite Dicke aufweisen,
**dadurch gekennzeichnet, dass**
sich die zweite Dicke von der ersten Dicke unterscheidet.

9. Verfahren nach Anspruch 8, wobei die eine oder mehreren gemusterten Ablagerungen (656), die innerhalb der ersten Region (420, 520) angeordnet sind, zwei oder mehr Sätze von überlappenden transparenten Elektroden (405, 410) umfassen, die adressierbare Segmente der AWO-Anzeigeschicht (330) bilden, und die eine oder mehreren gemusterten Ablagerungen (624), die innerhalb der zweiten Region (440, 540) angeordnet sind, eine Vielzahl von leitenden Verbindern (406) umfassen, die die zwei oder mehreren Sätze von sich überlappenden transparenten Elektroden (405, 410) mit einer Steuerung (450) der AWO-Anzeigeschicht (330) elektrisch koppeln.

10. Verfahren nach Anspruch 9, wobei die erste Dicke geringer ist als die zweite Dicke.

11. Verfahren nach Anspruch 10, wobei die sich überlappenden transparenten Elektroden (405, 410) eine jeweilige Breite aufweisen, die größer ist als eine jeweilige Breite jedes leitenden Verbinders (406) der Vielzahl von leitenden Verbindern (406).

12. Verfahren nach Anspruch 10, wobei die eine oder die mehreren gemusterten Ablagerungen (656), die innerhalb der ersten Region (420, 520) angeordnet sind, einen ersten Spalt zwischen jeder sich überlappenden transparenten Elektrode (405, 410) der zwei oder mehr Sätze von sich überlappenden transparenten Elektroden (405, 410) beinhalten, wobei die eine oder die mehreren gemusterten Ablagerungen (624), die innerhalb der zweiten Region (440, 540) angeordnet sind, einen zweiten Spalt zwischen jedem leitenden Verbinder (406) der Vielzahl von leitenden Verbindern (406) aufweisen, und wobei der erste Spalt eine entsprechende Breite aufweist, die geringer ist als eine Breite des zweiten Spalts.

13. Verfahren nach Anspruch 10, wobei der Wellenleiter (312) einen Auskoppler (316) umfasst, um Anzeigelicht aus dem Wellenleiter (312) auf das Auge (324) eines Benutzers zu richten, und wobei die erste Region (420, 520) dazu konfiguriert ist, im Wesentlichen einem Bereich zu entsprechen, der vom Auskoppler (316) in einem Sichtfeld des Benutzers eingenommen wird.

14. Verfahren nach Anspruch 8, wobei die mehreren Regionen der AWO-Anzeigeschicht (330) eine dritte Region (530) beinhalten, sodass die eine oder mehreren gemusterten Ablagerungen, die innerhalb der dritten Region (530) angeordnet sind, eine oder mehrere Zwischendicken umfassen, die zwischen der ersten Dicke und der zweiten Dicke liegen.

15. Verfahren, umfassend:
Ablagern eines ersten leitenden Musters (656) eines im Wesentlichen transparenten Leiters (632) auf einem optischen Substrat (601) in einer ersten Region (420, 520) unter Verwendung einer ersten Dicke des im Wesentlichen transparenten Leiters (632);
Ablagern eines zweiten leitenden Musters (624) eines im Wesentlichen transparenten Leiters (606) auf dem optischen Substrat (601) in einer zweiten Region (440, 540) unter Verwendung einer zweiten Dicke des im Wesentlichen transparenten Leiters (606); und
elektrisches Koppeln des ersten leitenden Musters (656) mit dem zweiten leitenden Muster (624),
**dadurch gekennzeichnet, dass**
sich die zweite Dicke von der ersten Dicke unterscheidet.

## Revendications

1. Système d'affichage (300) comprenant :
un guide d'ondes (312) comprenant un côté œil configuré pour faire face à un œil (324) d'un utilisateur, et un côté monde sensiblement opposé au côté œil ; et
une couche d'affichage d'occlusion de monde adressable (AWO) (330) pour occulter au moins partiellement une ou plusieurs parties adressables de lumière externe provenant du côté monde du guide d'ondes (312) ;
dans lequel la couche d'affichage AWO (330) comprend un ou plusieurs dépôts à motifs (624, 656) d'un conducteur sensiblement transparent disposés sur plusieurs régions de la couche d'affichage AWO (330), de telle sorte que les un ou plusieurs dépôts à motifs (624) disposés dans une première région (420, 520) des multiples régions ont sensiblement une première épaisseur, et de telle sorte que les un ou plusieurs dépôts à motifs (656) disposés dans une deuxième région (440, 540) des multiples régions ont sensiblement une seconde épaisseur,
**caractérisé en ce que**
la seconde épaisseur est différente de la première épaisseur.

2. Système d'affichage selon la revendication 1, dans lequel la couche d'affichage AWO (330) comprend un dispositif de commande (450), dans lequel les un ou plusieurs dépôts à motifs (656) disposés dans la première région (420, 520) comprennent deux ensembles d'électrodes transparentes superposées ou plus (405, 410) qui forment des segments adressables de la couche d'affichage AWO (330), et dans lequel les un ou plusieurs dépôts à motifs (624) disposés dans la deuxième région (440, 540) comprennent une pluralité de connecteurs conducteurs (406) qui couplent électriquement les deux ensembles d'électrodes transparentes superposées ou plus (405, 410) au dispositif de commande (450).

3. Système d'affichage selon la revendication 2, dans lequel la première épaisseur est inférieure à la seconde épaisseur.

4. Système d'affichage selon la revendication 3, dans lequel les électrodes transparentes superposées (405, 410) ont une largeur respective qui est supérieure à une largeur respective de chaque connecteur conducteur (406) de la pluralité de connecteurs conducteurs (406).

5. Système d'affichage selon la revendication 3, dans lequel les un ou plusieurs dépôts à motifs (656) disposés dans la première région (420, 520) comportent un premier espace entre chaque électrode transparente superposée (405, 410) des deux ensembles d'électrodes transparentes superposées ou plus (405, 410), dans lequel les un ou plusieurs dépôts à motifs (624) disposés dans la deuxième région (440, 540) comporte un second espace entre chaque connecteur conducteur (406) de la pluralité de connecteurs conducteurs (406), et dans lequel le premier espace a une largeur respective qui est inférieure à une largeur du second espace.

6. Système d'affichage selon la revendication 3, dans lequel le guide d'ondes (312) comprend un coupleur de sortie (316) pour diriger la lumière d'affichage hors du guide d'ondes (312) vers l'œil (324) d'un utilisateur, et dans lequel la première région (420, 520) est configurée pour correspondre sensiblement à une zone occupée par le coupleur de sortie (316) dans un champ de vision de l'utilisateur.

7. Système d'affichage selon la revendication 1, comprenant également une troisième région (530) des multiples régions, de telle sorte que les un ou plusieurs dépôts à motifs disposés dans la troisième région (530) comprennent une ou plusieurs épaisseurs intermédiaires qui sont comprises entre la première épaisseur et la seconde épaisseur.

8. Procédé, comprenant :
la direction de la lumière d'affichage à propager dans un guide d'ondes (312) ayant un côté œil configuré pour faire face à un œil (324) d'un utilisateur et un côté monde sensiblement opposé au côté œil ; et
l'occlusion sélective d'une ou plusieurs parties adressables de lumière externe provenant du côté monde du guide d'ondes (312) via une couche d'affichage d'occlusion de monde adressable (AWO) (330) couplée optiquement au côté monde du guide d'ondes (312), la couche d'affichage AWO (330) comprenant un ou plusieurs dépôts à motifs (624, 656) d'un conducteur sensiblement transparent disposés sur plusieurs régions (420, 520, 440, 540) de la couche d'affichage AWO (330), de telle sorte que les un ou plusieurs dépôts à motifs (624, 656) disposés dans une première région (420, 520) des multiples régions ont sensiblement une première épaisseur et les un ou plusieurs dépôts à motifs disposés dans une deuxième région des multiples régions ont sensiblement une seconde épaisseur,
**caractérisé en ce que**
la seconde épaisseur est différente de la première épaisseur.

9. Système selon la revendication 8, les un ou plusieurs dépôts à motifs (656) disposés dans la première région (420, 520) comprenant deux ensembles d'électrodes transparentes superposées ou plus (405, 410) qui forment des segments adressables de la couche d'affichage AWO (330), et les un ou plusieurs dépôts à motifs (624) disposés dans la deuxième région (440, 540) comprenant une pluralité de connecteurs conducteurs (406) qui couplent électriquement les deux ensembles d'électrodes transparentes superposées ou plus (405, 410) à un dispositif de commande (450) de la couche d'affichage AWO (330).

10. Procédé selon la revendication 9, la première épaisseur étant inférieure à la seconde épaisseur.

11. Procédé selon la revendication 10, les électrodes transparentes superposées (405, 410) ayant une largeur respective qui est supérieure à une largeur respective de chaque connecteur conducteur (406) de la pluralité de connecteurs conducteurs (406).

12. Procédé selon la revendication 10, les un ou plusieurs dépôts à motifs (656) disposés dans la première région (420, 520) comportant un premier espace entre chaque électrode transparente superposée (405, 410) des deux ensembles d'électrodes transparentes superposées ou plus (405, 410), les un ou plusieurs dépôts à motifs (624) disposés dans la deuxième région (440, 540) comportant un second espace entre chaque connecteur conducteur (406) de la pluralité de connecteurs conducteurs (406), et le premier espace ayant une largeur respective qui est inférieure à une largeur du second espace.

13. Procédé selon la revendication 10, dans lequel le guide d'ondes (312) comprend un coupleur de sortie (316) pour diriger la lumière d'affichage hors du guide d'ondes (312) vers l'œil (324) d'un utilisateur, et dans lequel la première région (420, 520) est configurée pour correspondre sensiblement à une zone occupée par le coupleur de sortie (316) dans un champ de vision de l'utilisateur.

14. Procédé selon la revendication 8, dans lequel les multiples régions de la couche d'affichage AWO (330) comportent une troisième région (530), de telle sorte que les un ou plusieurs dépôts à motifs disposés dans la troisième région (530) comprennent une ou plusieurs épaisseurs intermédiaires qui sont comprises entre la première épaisseur et la seconde épaisseur.

15. Procédé, comprenant :
le dépôt sur un substrat optique (601) d'un premier motif conducteur (656) d'un conducteur sensiblement transparent (632) dans une première région (420, 520) en utilisant une première épaisseur du conducteur sensiblement transparent (632) ;
le dépôt sur un substrat optique (601) d'un second motif conducteur (624) d'un conducteur sensiblement transparent (606) dans une deuxième région (440, 540) en utilisant une seconde épaisseur du conducteur sensiblement transparent (606) ; et
le couplage électrique du premier motif conducteur (656) au second motif conducteur (624),
**caractérisé en ce que**
la seconde épaisseur est différente de la première épaisseur.
